# EUROPEAN PATENT APPLICATION

(11) **EP 1 480 487 A1**
(43) Date of publication of application: **24.11.2004**
(21) Application number: 04252610.3
(22) Date of filing: 05.05.2004
(51) Int. Cl.: H04Q 7/38, H04Q 7/22

(54) **Notification to the calling party when the mobile called party becomes available**

(30) Priority: 23.05.2003 US 444529
(71) Applicant: LUCENT TECHNOLOGIES INC., Murray Hill, New Jersey 07974-0636 (US)
(72) Inventor: Lasken, Richard D., "Deceased" (US)
(74) Representative: Watts, Christopher Malcolm Kelway, Dr.

(57) **Abstract**

Several telecommunication-processing methods and an associated apparatus are provided. In one embodiment, the method includes: a) determining a mobile called party is not available for an original call initiated by a calling party, b) communicating an announcement to the calling party offering notification when the mobile called party becomes available, c) in response to the calling party electing the notification offer, periodically determining if the mobile called party is available, d) after determining the mobile called party is available, initiating a first call to the calling party with an announcement indicating that the mobile called party is available and offering to connect the calling party with the mobile called party, and e) in response to the calling party electing the connect offer, initiating a second call to the mobile called party and connecting the first and second calls. In other embodiments, the mobile called party is either "not registered" or "busy."

## Description

### BACKGROUND OF INVENTION

The invention generally relates to a telecommunication network and, more particularly, to an apparatus and method for notification of a calling party when a mobile called party becomes available (i.e., not busy and registered) and will be described with particular reference thereto. However, it is to be appreciated that the invention is also amenable to other applications.

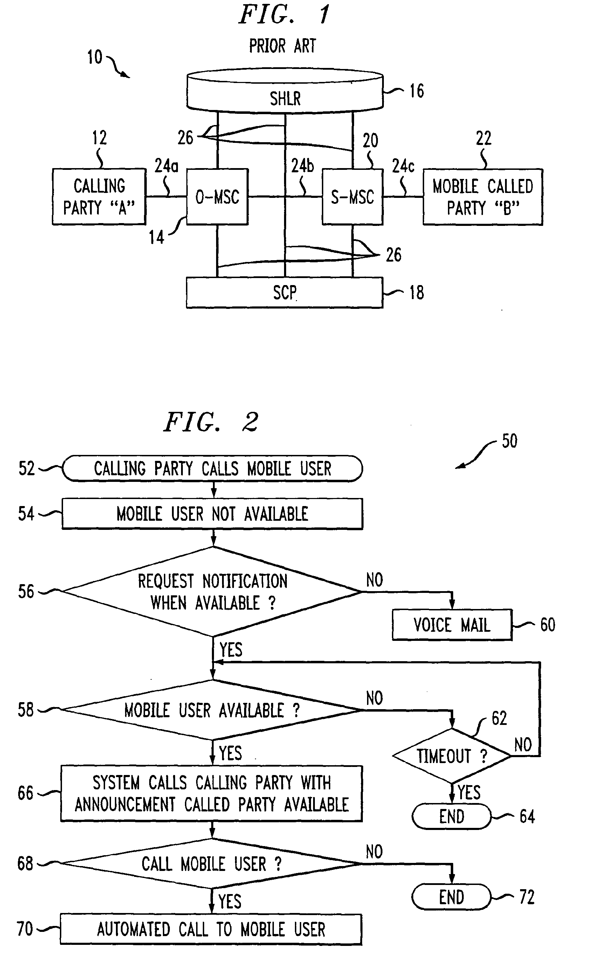

A telecommunication network often includes one or more wireless networks. These types of telecommunication networks are generally known in the art. One example of a typical telecommunication network is depicted in FIG. 1. The telecommunication network 10 includes a calling party "A" 12, an originating mobile switching center (O-MSC) 14, a standalone home location register (SHLR) 16, a service control point (SCP) 18, a serving mobile switching center (S-MSC) 20, and a mobile called party "B" 22.

Calling party "A" 12 may be using a wired telephone, personal communication system (PCS), or a mobile station (MS). Calling party "A" 12 is in communication with the O-MSC 14 via a voice trunk 24a or any other connection capable of carrying a voice or data call.

Each mobile switching center (MSC) is an automatic system that provides an interface for user traffic between a wireless network and other public switched networks, or other MSCs in the same or other wireless networks. The O-MSC 14 receives incoming calls for mobile unit subscribers (e.g., mobile called party "B" 22). The O-MSC 14 is in communication with the S-MSC 20 via a voice trunk 24b or any other connection capable of carrying a voice or data call. The O-MSC 14 is in communication with SHLR 16 and SCP 18 via control signaling links 26.

The S-MSC 20 provides service to mobile units that have traveled or roamed into their designated or predetermined geographic region (e.g., mobile called party "B" 22). The S-MSC 20 is in communication with mobile called party "B" 22 via a radio access network (RAN) connection 24c. The S-MSC 20 is in communication with SHLR 16 and SCP 18 via control signaling links 26.

The SHLR 16 includes a database that serves as a registrar to which a user's identity is assigned for record purposes. The database, for example, includes subscriber information, mobile station information, and location information for users. The SHLR 16 provides service control and mobility management for subscribers. Typically, an SHLR serves more than one MSC (as shown in FIG. 1). However, an HLR may be located within, and indistinguishable from, a particular MSC. The SHLR 16 is in communication with the SCP 18 via control signaling links 26.

The SCP 18 is a database and transaction-processing system that provides service control and service data functions. The SCP 18 performs a subscriber and application specific service in response to a query and then sends back instructions to perform specific functions and instructions for continuing call processing. Additionally, the SCP 18 is a mechanism for introducing new services and customizing services and features.

Mobile called party "B" 22 includes interface equipment (e.g., MS) used to terminate the radio (i.e., wireless) path at the mobile user side. Typically, such equipment also provides mobile called party "B" 22 with access to the communication network for outgoing calls.

Currently, when calling party "A" 12 calls mobile called party "B" 22, if party "B" is not registered or busy, the call is generally forwarded to a voice message system The only options for interactively communicating with party "B" are: 1) to leave a message and wait for the party "B" to return the call or 2) to call party "B" again later.

There is a particular need to provide another option to the calling party when a mobile user is busy or not registered that notifies the original calling party when the mobile user becomes available.

### BRIEF SUMMARY OF INVENTION

In one aspect of the invention, a method of notifying a calling party when a mobile called party becomes available in a telecommunication network including a wireless network is provided. The method includes: a) determining the mobile called party is not available for an original call initiated by the calling party, b) communicating an announcement to the calling party offering notification when the mobile called party is available, c) in response to the calling party electing the notification offer, periodically determining if the mobile called party is available, d) after determining the mobile called party is available, initiating a first call to the calling party with an announcement indicating that the mobile called party is available and offering to connect the calling party with the mobile called party, and e) in response to the calling party electing the connect offer, initiating a second call to the mobile called party and connecting the first and second calls.

In another aspect of the invention, a telecommunication processing method is provided. The method includes: a) determining a mobile called party is busy for an original call initiated by a calling party, b) communicating an announcement to the calling party and offering notification when the mobile called party becomes available, c) if the calling party elects the notification offer, periodically determining if the mobile called party has become available, d) after determining the mobile called party has become available, initiating a first call to the calling party with an announcement indicating that the mobile called party has become available and offering to connect the calling party with the mobile called party, and e) in response to the calling party electing the connect offer, initiating a second call to the mobile called party and connecting the first and second calls.

In still another aspect of the invention, a method of telecommunication processing is provided. The method includes: a) determining a mobile called party is not registered for an original call initiated by a calling party, b) communicating an announcement to the calling party and offering notification when the mobile called party becomes available, c) if the calling party elects the notification offer, periodically determining if the mobile called party has become available, d) after determining the mobile called party has become available, initiating a first call to the calling party with an announcement indicating that the mobile called party has become available and offering to connect the calling party with the mobile called party, and e) in response to the calling party electing the connect offer, initiating a second call to the mobile called party and connecting the first and second calls.

Benefits and advantages of the invention will become apparent to those of ordinary skill in the art upon reading and understanding the description of the invention provided herein.

### BRIEF DESCRIPTION OF DRAWINGS

The invention is described in more detail in conjunction with a set of accompanying drawings.

FIG. 1 is a block diagram of a telecommunications network.

FIG. 2 is a flowchart according to an embodiment of the invention of a calling party notification process for a call to a mobile user that was originally not available at the time the call was made.

FIG. 3 is a call flow diagram according to an embodiment of the invention for a mobile user not registered scenario.

FIG. 4 is a call flow diagram according to an embodiment of the invention for a mobile user busy scenario.

### DETAILED DESCRIPTION

While the invention is described in conjunction with the accompanying drawings, the drawings are for purposes of illustrating exemplary embodiments of the invention and are not to be construed as limiting the invention to such embodiments. It is understood that the invention may take form in various components and arrangement of components and in various steps and arrangement of steps beyond those provided in the drawings and associated description. In the drawings, like reference numerals denote like elements and similar reference numerals denote similar elements.

With reference to FIG. 2, a process of notifying a calling party when a called party becomes available 50 is provided according to an embodiment of the invention. The calling party may be a landline user, PCS user, a mobile user, or any other type of telephone service user. The called party is a mobile user. The process begins at step 52 when the calling party calls the mobile user. The invention is associated with calls where the mobile user is originally not available (step 54). The system recognizes several conditions for which the mobile user is not available. For example, when the mobile user's line is busy and when the mobile user is not registered (i.e., not active). If the mobile user is available, the original call will ring through and either be answered by the mobile user or terminated by the calling party prior to being answered.

With the mobile user not available, at step 56 the process plays an announcement to the calling party asking whether the calling party wants to be notified when the mobile user becomes available or connected to the mobile user's voice mail. If the calling party selects to be notified, the process continues to step 58. Otherwise, the calling party is routed to the mobile user's voice mail (step 60).

At step 58, the process begins a loop to periodically check if the mobile user becomes available for a predetermined period. If the mobile user is not available, the process checks to see if the predetermined period has timed out (step 62). If the period has not timed out, the process repeats step 58. If the period has timed out, the process is ended (step 64).

If the mobile user becomes available at step 58, the process calls the calling party and announces that the mobile user is available (step 66) with an option to automatically place a call to the mobile user (step 68). If the calling party elects to have the process automatically call the mobile user, the process continues to step 70 and automatically calls the mobile user for the calling party. Otherwise, the process is ended (step 72) and the calling party may call the mobile user again, at the calling party's choosing.

In one embodiment, the called mobile user is within the service provider's SHLR network.

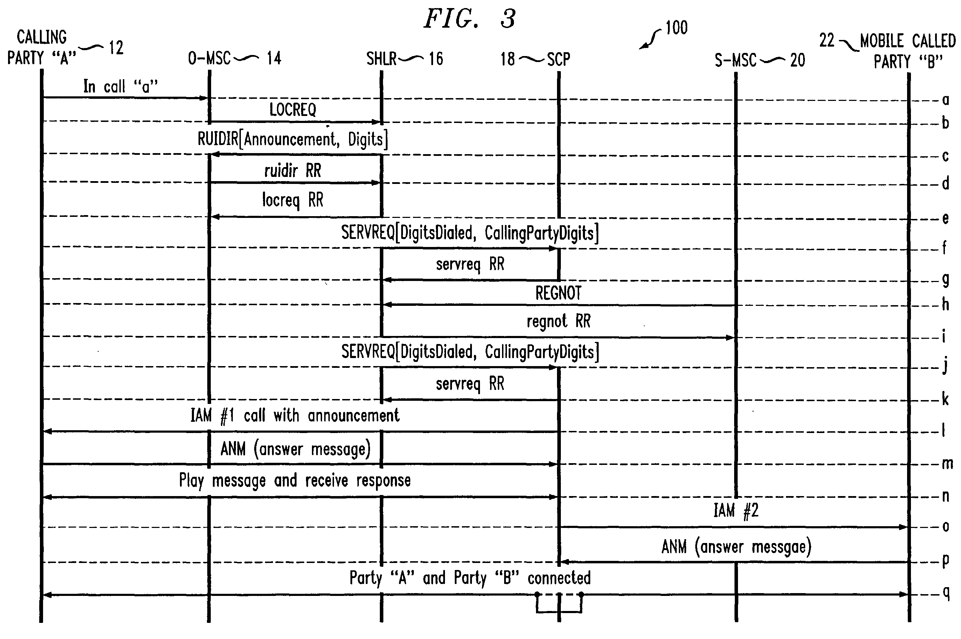

With reference to FIG. 3, a call flow diagram for a mobile user "not registered" scenario according to an embodiment of the invention is provided. An exemplary telecommunications infrastructure for the call flow diagram includes the calling party "A" 12, O-MSC 14, SHLR 16, SCP 18, S-MSC 20, and mobile called party "B" 22 as depicted in FIG. 1. Alternate infrastructure components providing similar functions are also contemplated. The call flow begins at line (a) and continues in a step fashion to line (q).

The "not registered" scenario begins at line (a) when calling party "A" 12 places a call to mobile called party "B" 22. At this point, call "a" is communicated from calling party "A" 12 to the O-MSC 14. Next, at line (b), a Location Request (LOCREQ) message is communicated from the O-MSC 14 to the called party's SHLR 16. The SHLR 16 checks to see if called party is authorized and active. In this scenario, the called party is not active (i.e., not registered). Thus, the SHLR 16 communicates a Remote User Interaction Directive (RUIDIR) message with Announcement and Digits parameters to the O-MSC 14 to play an announcement requesting instructions on whether the calling party wants to be notified when the called party is available or be directed to voice mail (line (c)).

After the calling party responds, at line (d), the O-MSC 14 communicates a remote user interaction directive (ruidir) return result to the SHLR 16. If notification is requested, the SHLR 16 marks the called party record accordingly. If notification is not requested, the calling party is given access to the called party's voice mail or the call is simply ended. At line (e), the SHLR 16 communicates a locreq return result to the O-MSC 14. Next, at line (f), the SHLR 16 communicates a Service Request (SERREQ) message to the SCP 18 with DigitsDialed and CallingPartyDigits parameters. The "notify me" process stores this information. A service request (servreq) return result is communicated from the SCP 18 to the SHLR 16 (line (g)).

At line (h), in response to party B 22 entering the serving area of S-MSC 20 and registering with the S-MSC 20, the S-MSC 20 communicates to the SHLR 16 a Registration Notification (REGNOT) message. This is acknowledged by the SHLR 16 returning a registration notification return result (regnot RR) to the the S-MSC 20. At this point, the SHLR 16 recognizes that the called party is available and sends a SERVREQ message to the "notify me" process in the SCP 18 (line (j)). Next, at line (k), the SCP 18 communicates a servreq return result to the SHLR 16.

At line (I), the SCP 18, via, for example, an enhanced media resource server (eMRS), initiates a call to original calling party "A" 12 and communicates a first initial address message (IAM) with an announcement to O-MSC 14, resulting in O-MSC 14 alerting calling party "A" 12. In response, calling party "A" 12 answers the incoming call, causing the O-MSC 14 to communicate an answer message (ANM) return result to the SCP 18 (line (m)). Next, at line (n), the SCP 18 plays the announcement to calling party "A" 12. The announcement, for example, states that mobile directory number (MDN) xxxxxxxxx (i.e., mobile called party "B" 22) is available and to press "1" to call the party. A response by calling party "A" 12 is also communicated to the SCP 18 in line (n).

Next, if calling party "A" 12 pressed "1" (i.e., requested the process to automatically call the mobile user), at line (o), the SCP 18, via, for example, the eMRS, initiates a call to original mobile called party "B" 22 and communicates a second IAM to S-MSC 20, resulting ins S-MSC 20 alerting mobile called party "B" 22. If mobile called party "B" 22 is busy, the process returns to line (c) (see paragraph 27) to retry the notification process for the "not registered" scenario. If mobile called party "B" 22 answers, an ANM is communicated to the SCP 18 (line (p)) from the S-MSC 20. When both the calls (i.e., first IAM and second IAM) are successful, at line (q), calling party "A" 12 and mobile called party "B" 22 are connected by the SCP 18.

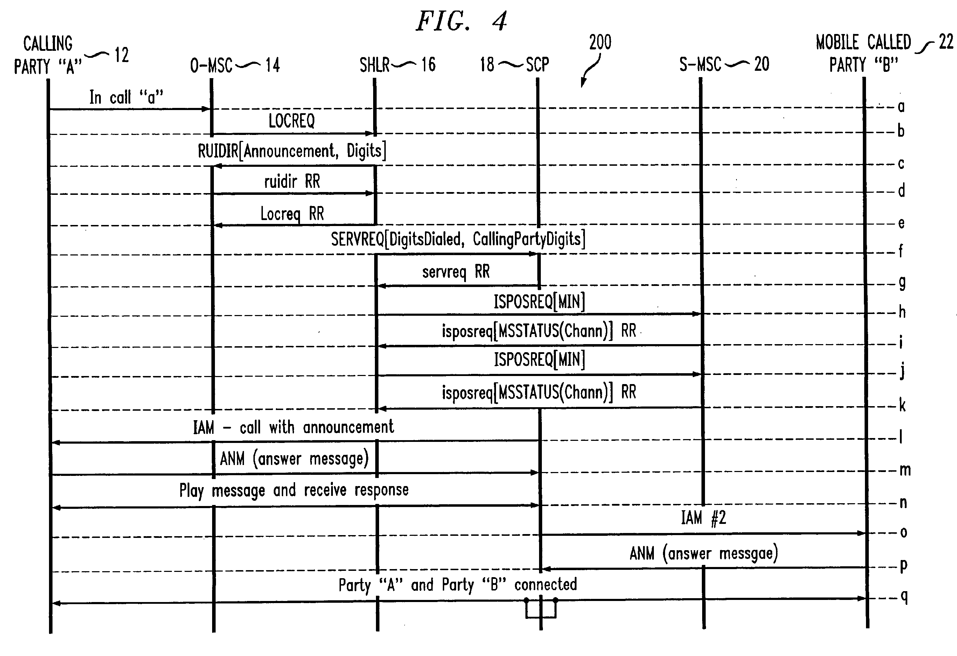

With reference to FIG. 4, a call flow diagram for a mobile user "busy" scenario according to an embodiment of the invention is provided. An exemplary telecommunications infrastructure for the call flow diagram includes the calling party "A" 12, O-MSC 14, SHLR 16, SCP 18, S-MSC 20, and mobile called party "B" 22 as depicted in FIG. 1. Alternate infrastructure components providing similar functions are also contemplated. The call flow begins at line (a) and continues in a step fashion to line (q).

The "busy" scenario begins at line (a) when calling party "A" 12 places a call to mobile called party "B" 22. At this point, in call "a" is communicated from calling party "A" 12 to the O-MSC 14. Next, at line (b), a LOCREQ message is communicated from the O-MSC 14 to the called party's SHLR 16. The SHLR 16 checks to see if called party is authorized and active. In this scenario, the called party is busy. Thus, the SHLR 16 communicates a RUIDIR message with Announcement and Digits parameters to the O-MSC 14 to play an announcement requesting instructions on whether the calling party wants to be notified when the called party is available or be directed to voice mail (line (c)).

After the calling party responds, at line (d), the O-MSC 14 communicates a ruidir return result to the SHLR 16. If notification is requested the SHLR 16 marks the called party record accordingly. If notification is not requested, the calling party is given access to the called party's voice mail or the call is simply ended. At line (e), the SHLR 16 communicates a locreq return result to the O-MSC 14. Next, at line (f), the SHLR 16 recognizes that the mobile called party is busy and communicates a SERVREQ message to the SCP 18 with DigitsDialed and CallingPartyDigits parameters. The "notify me" process stores this information. A servreq return result is communicated from the SCP 18 to the SHLR 16 (line (g)).

At line (h), the SCP 18 periodically sends an Inter-System Position Request (ISPOSREQ) message to the S-MSC 20 for a predetermined period of time to see if the mobile called party is available. The S-MSC 20 communicates an inter-system position request (isposreq) return result with an MS status parameter having bits set if the mobile user is on a traffic channel (e.g., Chann bit) (line (i)). The number of trials and periodicity of the busy query may be specified in the "notify me" process. Lines (j) and (k) depict one repetition of the query.

When mobile called party "B" 22 is available (i.e., no longer busy), the SCP 18, via, for example, the eMRS, initiates a call to original calling party "A" 12 and communicates a first IAM with an announcement to O-MSC 14, resulting in O-MSC 14 alerting calling party "A" 12 (line (1)). In response, calling party "A" 12 answers the incoming call, causing the O-MSC 14 to communicates an ANM return result to the SCP 18 (line (m)). Next, at line (n), the SCP 18 plays the announcement to calling party "A" 12. The announcement, for example, states that mobile directory number (MDN) xxxxxxxxx (i.e., mobile called party "B" 22) is available and to press "1" to call the party. A response by calling party "A" 12 is also communicated to the SCP 18 in line (n).

Next, if calling party "A" 12 pressed "1" (i.e., requested the process to automatically call the mobile user), at line (o), the SCP 18, via, for example, the eMRS, initiates a call to original mobile called party "B" 22 and communicates a second IAM to mobile called party "B" 22. If mobile called party "B" 22 is busy, the process returns to line (c) to retry the notification process for the "busy" scenario. If mobile called party "B" 22 answers, an ANM is communicated to the SCP 18 (line (p)). When both the calls (i.e., first IAM and second IAM) are successful, at line (q), calling party "A" 12 and mobile called party "B" 22 are connected by the SCP 18.

While the invention is described herein in conjunction with exemplary embodiments, it is evident that many alternatives, modifications, and variations will be apparent to those skilled in the art. Accordingly, the embodiments of the invention in the preceding description are intended to be illustrative, rather than limiting, of the spirit and scope of the invention. More specifically, it is intended that the invention embrace all alternatives, modifications, and variations of the exemplary embodiments described herein that fall within the spirit and scope of the appended claims or the equivalents thereof

## Claims

1. A method of notifying a calling party when a mobile called party becomes available in a telecommunication network including a wireless network, the method including the steps:
a) determining the mobile called party is not available for an original call initiated by the calling party;
b) communicating an announcement to the calling party offering notification when the mobile called party is available;
c) in response to the calling party electing the notification offer, periodically determining if the mobile called party is available;
d) after determining the mobile called party is available, initiating a first call to the calling party with an announcement indicating that the mobile called party is available and offering to connect the calling party with the mobile called party; and
e) in response to the calling party electing the connect offer, initiating a second call to the mobile called party and connecting the first and second calls.

2. The method as set forth in claim 1, before step a) further including:
f) processing the original call to the mobile called party from the calling party.

3. The method as set forth in claim 1, between steps c) and d) further including:
f) if the mobile called party is not available after the periodically determining step, determining if a predetermined period has timed out; and
g) if the predetermined period has timed out, ending the process.

4. The method as set forth in claim 1, further including:
f) in response to the calling party not electing the connect offer, ending the process.

5. The method as set forth in claim 1, during step e) further including:
f) determining that the mobile called party is busy for the second call and returning to step b) to retry the notification process.

6. The method as set forth in claim 1, step a) further including:
f) determining that the mobile called party is not registered.

7. The method as set forth in claim 1, step a) further including:
f) determining that the mobile called party is busy.

8. An apparatus in a telecommunication network including a wireless network, the apparatus including:
means for determining a mobile called party is not available for an original call initiated by a calling party;
means for communicating an announcement to the calling party offering notification when the mobile called party is available;
means for periodically determining if the mobile called party is available in response to the calling party electing the notification offer;
means for initiating a first call to the calling party with an announcement indicating that the mobile called party is available after determining the mobile called party is available and offering to connect the calling party with the mobile called party; and
means for initiating a second call to the mobile called party and connecting the first and second calls in response to the calling party electing the connect offer.

9. The apparatus as set forth in claim 8, the determining means further including:
means for determining that the mobile called party is not registered.

10. The apparatus as set forth in claim 8, the determining means further including:
means for determining that the mobile called party is busy.
